# EUROPÄISCHE PATENTSCHRIFT

(11) **EP 0 504 665 B1**
(45) Veröffentlichungstag und Bekanntmachung des Hinweises auf die Patenterteilung: **15.11.1995**
(21) Anmeldenummer: 92103735.4
(22) Anmeldetag: 05.03.1992
(51) Int. Cl.: A61C 13/277, A61C 5/08

(54) **Verbindungselement für die Zahnprothetik**
Connection element for dental prosthesis
Elément de jonction pour prothèse dentaire

(30) Priorität: 13.03.1991 DE 9103022 U
(43) Veröffentlichungstag der Anmeldung: 23.09.1992
(73) Patentinhaber: Obersat, Adam, 67618 Kaiserslautern (DE)
(72) Erfinder: Obersat, Adam, 67618 Kaiserslautern (DE)
(74) Vertreter: Patentanwälte Möll und Bitterich

(56) Entgegenhaltungen:
- EP-A- 0 136 671
- WO-A-90/09766
- SD-Konus Connectorsystem Prospekt

## Beschreibung

Die Erfindung betrifft aus Patrize, Matrize und einem auswechselbaren Friktionselement bestehende frikative Verbindungselemente der Zahnprothetik gemäß dem Oberbegriff des Anspruchs 1.

In der Zahnprothetik werden zur Verankerung eines herausnehmbaren Prothesenteils am Restgebiß spezielle Verbindungselemente verwendet. Man unterscheidet: Halteelemente, resiliente Verbindungselemente, scharnierartige Verbindungselemente und starre Verbindungselemente. Die vorliegende Erfindung bezieht sich auf resiliente und starre Verbindungselemente, bei denen die Haltefunktion zwischen Patrize und Matrize mit Hilfe der Friktion, gegebenenfalls auch zusätzlich mit Hilfe der Retention, bewirkt wird.

Um das gewollte Herausnehmen der Prothese, beispielsweise zur Reinigung derselben, ohne Beschädigung des Restgebisses zu ermöglichen, soll die Friktion zwischen Patrize und Matrize einen bestimmten Betrag nicht überschreiten. Günstig sind Lösekräfte zwischen 300 und 500 p. Während des Tragens der Prothese nutzen sich die Friktionsflächen von Patrize und Matrize ab, die Friktion geht verloren und die Prothese löst sich. Um hier Abhilfe zu schaffen, gibt es eine Reihe von bekannten Lösungen, beispielsweise das sogenannte Schwalbenschwanz-Geschiebe nach Schatzmann mit einer auswechselbaren Metallbolzen-Spiralfeder-Kombination oder das sogenannte Snaplock mit einer
Metallkugel-Spiralfeder-Kombination. Die Spiralfeder erzeugt den Preßdruck zwischen Patrize und Matrize, der über den Reibkoeffizienten die Haltekraft erzeugt. Zusätzlich kann in der der Kugel bzw. dem Bolzen gegenüberliegenden Fläche eine Rastvertiefung eingearbeitet sein, so daß der Halt zwischen Patrize und Matrize nicht nur frikativ, sondern auch retentiv erfolgt.

Für den Einsatz bei Teleskopen wird der sogenannte TK-Snap angeboten. Dies ist ein vorgefertigtes federndes Funktionselement mit einer kugeligen Friktionsfläche. Kugelfläche und Feder werden durch ein einziges, in geeigneter Weise geformtes Blechteil gebildet, das in eine hinterschnittene Vertiefung passender Größe eingesetzt wird (WO 90/09766).

Seit kurzem ist unter der Bezeichnung "SD-KONUS-CONNECTOR" ein System zum spannungsfreien Einsetzen des Sekundärteils von Konus- und Teleskopkronen sowie für die gezielte Einstellung der Friktion bekannt. Darin werden aus Kunststoffen unterschiedlicher Härte hergestellte Friktionshilfen mit unterschiedlich gewölbten Friktionsflächen verwendet. Die Form der Friktionshilfen ähnelt einem Nagel; der Schaft wird in eine Sackbohrung eingesteckt, der Kopf liegt flach auf seiner Unterlage auf. Aufgrund seiner minimalen Dicke erzeugt der Kopf schon bei geringster Verformung hohe Federkräfte; Abrieb und Verschleiß sind hoch, Friktion und Lebensdauer sind klein.

Ein großes Problem in der Zahnprothetik ist der geringe Platz, der für die Verbindungselemente zur Verfügung steht. Daher benötigen alle bekannten mit Federn ausgerüsteten Verbindungselemente, gleichgültig ob es sich um Spiralfedern, Flachfedern oder Federbleche handelt, ein nicht unerhebliches Bauvolumen, da sonst die Federn, die wie schon erwähnt wenigstens Friktionskräfte von 300 bis 500 p erzeugen sollen, nach kurzer Zeit erlahmen oder brechen.

Das aus der DE-A-33 35 904 bekannte vorgefertigte Friktionselement, welches gegebenenfalls auch retentiv wirkt, zeichnet sich durch eine extrem geringe Bauhöhe aus, bedingt durch die Verwendung einer ebenen, S-förmig gebogenen Feder.

Ein weiterer Problempunkt ist die Mundhygiene. In die Hohlräume, die die Federn, Bolzen und/oder Kugeln aufnehmen, dringen auch Speichel und Speisereste ein. Sie können bei der normalen Reinigung der Prothese nicht wieder entfernt werden, weil bei herausgenommener Prothese die Öffnung durch das die Friktion bzw. Retention bewirkende Kugel-Stift- und/oder Federelement verschlossen wird.

Der vorliegenden Erfindung liegt die Aufgabe zugrunde, ein Verbindungselement der eingangs genannten Art anzugeben, dessen Friktionselement nur ein geringes Bauvolumen benötigt, ohne weiteres auswechselbar ist, keine Probleme bezüglich der Mundhygiene aufwirft.

Diese Aufgabe wird gelöst durch ein gattungsgemäßes Verbindungselement mit den Merkmalen gemäß Kennzeichen des Anspruchs 1.

Ein wesentlicher Vorteil der vorliegenden Erfindung liegt in der drastischen Reduzierung des Bauvolumens des Friktionselements. Der die Friktion und gegebenenfalls Retention bewirkende Kopf des Friktionselementes ist gleichzeitig die Feder, deren Eigenschaften nicht nur durch das Kunststoffmaterial, sondern zusätzlich durch die Formen der balligen Kopf-Unterseite und der konischen Ansenkung bestimmt werden. Der Schaft hat lediglich die Aufgabe, das Friktionselement an seinem Prothesenteil festzuhalten. Die erforderliche Schaftlänge ist äußerst gering; es genügt z. B. 1 Millimeter.

Ein weiterer wesentlicher Vorteil der vorliegenden Erfindung ist die verbesserte Mundhygiene. Dank der Tatsache, daß bei eingesetzter Prothese der Kopf des Friktionselementes kräftig in den angesenkten Konus der Halteöffnung gepreßt wird, ist diese gegen das Eindringen von Speichel und Speiseresten hermetisch abgedichtet. Auf diese Weise kann auch dann, wenn die Halteöffnung als Sackbohrung ausgebildet ist, mit Sicherheit ausgeschlossen werden, daß Speichel und Speisereste eindringen und sich dort zersetzen können.

Dank der Kleinheit und Preiswürdigkeit des aus Kunststoff bestehenden Friktionselementes kann dieses in fast beliebiger Anzahl und an fast beliebigen Orten angebracht werden. Dabei empfiehlt es sich, drei oder mehr Friktionselemente vorzusehen, da dann eine statisch bestimmte Lagerung zwischen Patrize und Matrize möglich wird und beim Einsetzen bzw. Herausnehmen der Prothese eine Reibung Metall gegen Metall entfällt.

Die Friktionsfläche des Kopfes kann grundsätzlich beliebig, d. h. auch flach ausgebildet sein. Gemäß einer bevorzugten Ausgestaltung der Erfindung ist die Friktionsfläche ballig, und zwar insbesondere dann, wenn in der dem Friktionskopf gegenüberliegenden Wand eine Rastvertiefung eingearbeitet ist.

Vorzugsweise besitzt der Schaft Friktionslamellen, die sich elastisch gegen die Wand der Halteöffnung stützen. Diese verbessern zusätzlich die Abdichtung gegen Speisereste und Speichel.

Vorteilhafte Querschnittsformen der Friktionslamellen sind Sägezahn, Welle oder Gewinde. Diese Querschnittsformen erleichtern das Einsetzen des Friktionselementes und erschweren das Herausfallen.

Die Friktionslamellen ermöglichen eine zusätzliche Verankerung des Friktionselementes in der Halteöffnung. Hierzu wird die Halteöffnung am rückseitigen Ende zylindrisch bis konusstumpfförmig angesenkt. Ist der Schaft des Friktionselementes lang genug, wird sich die letzte Friktionslamelle aufspreizen. Das Friktionselement sitzt dann unverlierbar fest. Im Reparaturfall kann es trotzdem vom Zahntechniker mühelos entfernt und durch ein neues Friktionselement ersetzt werden.

Gemäß einer Erweiterung kann für das Friktionselement zusätzlich ein aus Kunststoff bestehender Haltekopf vorgesehen sein, der von hinten auf den Schaft aufgesteckt wird und dabei mit den Friktionslamellen verrastet. Ist die Halteöffnung rückseitig konisch angesenkt, so wird bei Zugbeanspruchung des Friktionselementes der Haltekopf auf den Schaft bzw. dessen Friktionslamellen gepreßt.

Im einfachsten Fall sind die Querschnitte des Friktionselementes und der Halteöffnung kreisrund. Es besteht jedoch auch die Möglichkeit, die Querschnitte oval bis rechteckig zu gestalten, ohne daß die Funktion darunter leidet. Falls der Querschnitt rechteckig ist, besteht darüber hinaus die Möglichkeit, das Friktionselement und gegebenenfalls den zusätzlichen Haltekopf von einem extrudierten Kunststoffteil abzuschneiden. Dies macht eine erhebliche Kostenersparnis möglich.

Im Fall von runden und ovalen Querschnitten sind Friktionselement und Haltekopf vorzugsweise Spritzgußteile. Spritzgußteile lassen sich in vollautomatischen Verfahren in großen Stückzahlen preiswert fertigen. Auch eine Herstellung als Drehteil ist möglich.

Es besteht die Möglichkeit, vom Schaft aus eine Bohrung oder einen Schlitz in das Friktionselement einzuarbeiten, wodurch die Federeigenschaften des Schaftes und gegebenenfalls des Friktionskopfes insgesamt weicher werden.

Um die Handhabung des Friktionselementes, das in der Praxis einen Durchmesser von z. B. 1 mm und eine Länge von z. B. 3 mm hat und gegebenenfalls des Haltekopfes, dessen Abmessungen eher noch kleiner sind, zu erleichtern, empfiehlt es sich, einen Halter anzuformen, insbesondere über eine Sollbruchstelle.

Anhand der Zeichnung soll die Erfindung in Form von Ausführungsbeispielen näher erläutert werden. Es zeigen in schematischer Darstellung:
- Fig. 1: einen Schnitt durch eine Doppelkrone,
- Fig. 2: einen Schnitt durch eine erste Ausführungsform eines Friktionselementes,
- Fig. 3: einen Schnitt durch eine zweite Ausführungsform eines Friktionselementes,
- Fig. 4: einen Schnitt durch eine dritte Ausführungsform eines Friktionselementes,
- Fig. 5: einen Schnitt durch eine vierte Ausführungsform eines Friktionselementes,
- Fig. 6: einen Schnitt durch eine fünfte Ausführungsform eines Friktionselementes,
- Fig. 7: eine perspektivische, teilweise aufgebrochene Darstellung eines Friktionselementes in Form eines Teil-Teleskops und
- Fig. 8: ein Friktionselement mit angeformtem Halter.

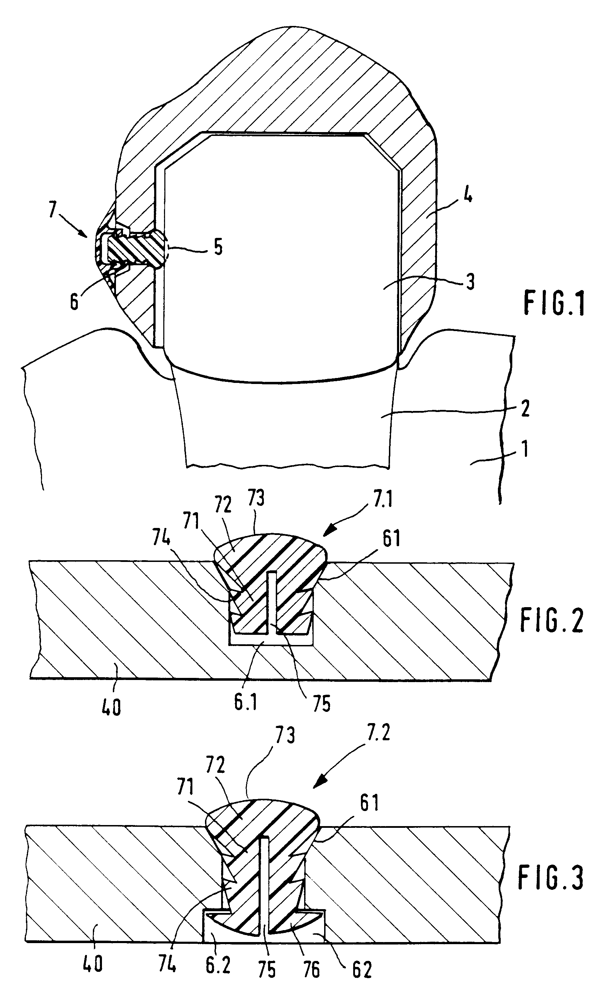

Fig. 1 zeigt im Schnitt ein Kiefermodell 1, den Abguß eines Zahnstumpfes 2, eine daraufgesetzte Primärkrone als Patrize 3 und eine darübergestülpte Sekundärkrone als Matrize 4. Patrize 3 und Matrize 4 bilden eine Doppelkrone, d. h. ein geschlossenes Teleskop mit parallelisierten Wänden.

In eine Wand der Matrize 4 ist eine Bohrung 6 eingearbeitet, in die ein aus Kunststoff bestehendes Friktionselement 7 eingesetzt ist. Form und Funktion des Friktionselementes 7 werden anhand der Fig. 2 bis 8 noch erläutert.

In die dem Friktionselement 7 gegenüberliegende Wand der Patrize 3 ist eine Rastvertiefung 5 eingearbeitet, in die der Kopf des Friktionselementes 7 einrastet, so daß die Haltewirkung zwischen Patrize 3 und Matrize 4 nicht nur frikativ, sondern zusätzlich auch retentiv ist.

Es versteht sich, daß das erfindungsgemäße Friktionselement 7 nicht nur bei Teleskopkronen der in der Fig. 1 dargestellten Art verwendet werden kann. Die Anwendung ist vielmehr bei allen starren und resilienten Verbindungselementen der Zahnprothetik möglich, wobei das äußerst geringe Bauvolumen des Friktionselementes 7 und seine Preiswürdigkeit eine erheblich breitere Anwendung ermöglichen als dies bei den Friktionselementen nach dem Stand der Technik möglich ist.

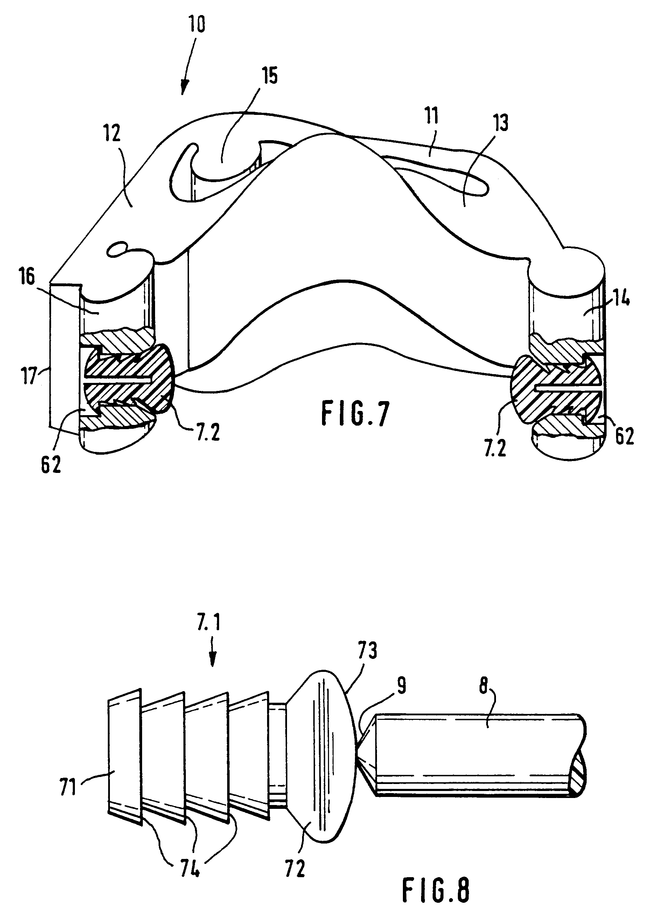

Ein Beispiel hierfür zeigt Fig. 7. Es handelt sich um das Sekundärteil einer abnehmbaren Prothese in Form eines Teil-Teleskops 10 mit paralellisierten Wänden, wie es in der DE-U-91 02 106 beschrieben ist. Das Teil-Teleskop 10 besteht im wesentlichen aus einer lingualen Außenteleskopwand 11, einer Stützteleskopwand 12, einem Matrizensteg 13 und drei Friktionszylindern 14, 15, 16. Die abnehmbare Prothese (nicht dargestellt) wird an der ebenen Außenwand 17 der Stützteleskopwand 12 befestigt. In die Friktionszylinder 14, 15, 16 sind Halteöffnungen 6.2 eingearbeitet, in die Friktionselemente 7.2 unverlierbar eingesteckt sind. Dadurch entsteht eine statisch bestimmte Lagerung zwischen Patrize und Matrize. Außerdem entfällt beim Einsetzen bzw. Herausnehmen der Prothese eine Reibung Metall gegen Metall.

Fig. 2 zeigt im Schnitt ein erstes, besonders einfaches Friktionselement 7.1, eingesetzt in eine Sackbohrung 6.1 in einer Wand 40. Das Friktionselement 7.1 besitzt einen Schaft 71, der mit umlaufenden Friktionslamellen 74 versehen ist. Deren Abmessungen sind so gewählt, daß sie sich elastisch gegen die Wand der Bohrung 6.1 anlegen und das Friktionselement 7.1 dort fixieren.

Das Friktionselement 7.1 besitzt als wesentliches Funktionsteil einen Friktionskopf 71, dessen Unterseite konisch bis ballig geformt ist. Das benachbarte Ende der Bohrung 6.1 ist konisch angesenkt. Dadurch wird der Friktionskopf 71 beim Einsetzen der Prothese in den Konus 61 hineingepreßt, wobei sich über den Winkel des Konus 61 in Verbindung mit dem Reibkoeffizienten und der Elastizität des Kunststoffmaterials einerseits und die Form des Friktionskopfes 71 andererseits die erforderliche Friktionskraft aufbaut.

Falls erforderlich, können die Friktions- und Retentionskräfte durch einen eingearbeiteten Schlitz 75 reduziert werden.

Durch das Einpressen des Friktionskopfes 72 in den Konus 61 wird die Bohrung 6.1 gegen das Eindringen von Speichel und Speiseresten hermetisch abgedichtet. Mundgeruch verursachende Zersetzungen sind daher auszuschließen.

Darüber hinaus besteht die Möglichkeit, das Friktionselement 7.1 beispielsweise im Fall einer Reparatur ohne Schrauben, Löten, Schneiden oder dergleichen in einfachster Weise auswechseln zu können. Ebenso einfach läßt es sich an herkömmlichen Verbindungskonstruktionen nachrüsten, die so gegebenenfalls wieder funktionstüchtig werden.

Das Ende der Sackbohrung 6.1 laßt sich birnenförmig erweitern, wie es anhand der Fig. 3 näher beschrieben wird, um das Friktionselement 7.1 verankern zu können.

Fig. 3 zeigt ein weiteres Friktionselement 7.2. In diesem Fall ist die Öffnung 6 als Durchgangsöffnung 6.2 ausgebildet, wobei das rückseitige Ende eine zylindrische Ansenkung 62 besitzt. Dank dieser Ansenkung 62 kann die hinterste Friktionsrille 74 sich aufspreizen, so daß das Friktionselement 7.2 unverlierbar in der Öffnung 6.2 sitzt. Gleichwohl kann der Zahntechniker das Friktionselement 7.2 im Falle einer Reparatur problemlos austauschen.

Bei geeigneter Ausbildung von Ansenkung 62 und Friktionsrillen 74 ist auch von der Rückseite her eine Abdichtung gegen Speichel und Speisereste möglich. Gleichwohl stellt sich das Problem nicht in dieser Schärfe, da bei einer Durchgangsbohrung wie in Fig. 3 dargestellt Speichel und Speiseresten erheblich einfacher entfernt werden können als bei einer Sackbohrung wie in Fig. 2.

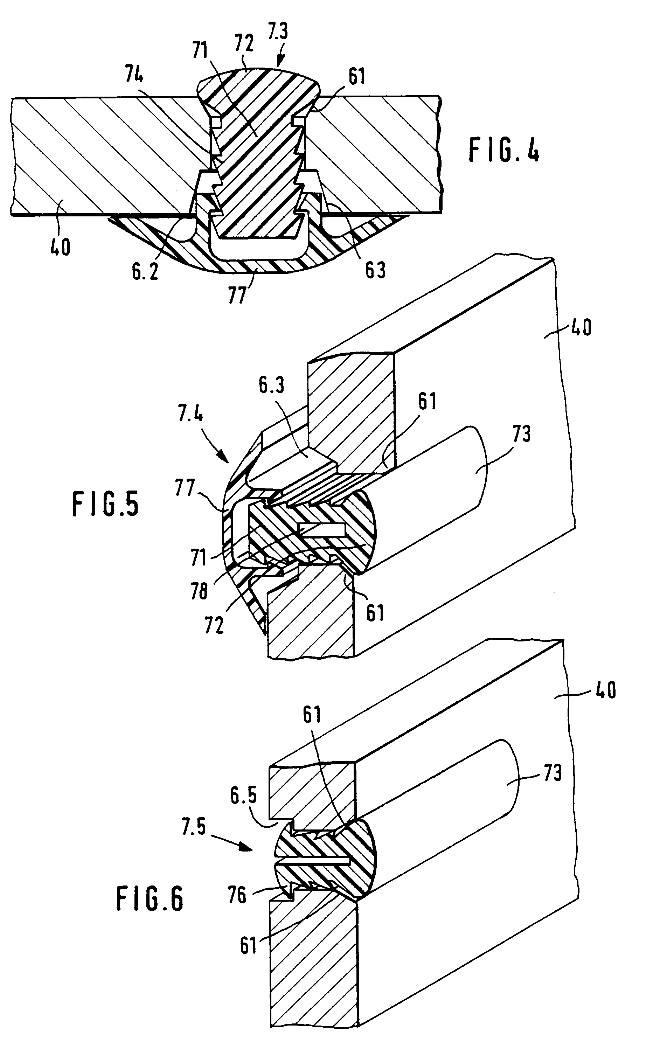

Fig. 4 zeigt ein drittes Friktionselement 7.3. An der Rückseite der Wand 4 ist ein zusätzlicher Haltekopf 77 auf den verlängerten Schaft 71 aufgesetzt, wobei er mit den Friktionslamellen 74 verrastet. Diese besitzen in diesem Ausführungsbeispiel vorzugsweise einen sägezahnförmigen Querschnitt.

Bei Zugbeanspruchung des Friktionselementes 7.3 wird der Schaft des Haltekopfes 77 gegen die konische Wand der rückseitigen Ansenkung 63 gepreßt und somit gleichsam verriegelt.

Die Durchgangsbohrung 6.2 besitzt hier eine kegelstumpfförmige Ansenkung 63, die das Eindrücken des Haltekopfes 77 erleichtert bzw. das Aufspreizen der Friktionslamellen 74 ermöglicht.

Waren bei den Ausführungsbeispielen der Fig. 2 bis 4 die Querschnitte von Öffnung und Friktionselement kreisrund, so zeigen die Fig. 5 und 6, daß auch rechteckige Querschnittsformen ebenso möglich sind wie andere, beispielsweise ovale Querschnittsformen, die nicht gesondert dargestellt sind.

Aufbau und Funktion des Friktionselementes 7.4 in Fig. 5 entsprechen dem der Fig. 4; Aufbau und Funktion des Friktionselementes 7.5 in Fig. 6 entsprechen dem der Fig. 3.

Während die Friktionselemente der Fig. 2 bis 4 im Spritzgußverfahren oder spanabhebend einzeln hergestellt werden müssen, können die in den Fig. 5 und 6 dargestellten Friktionselemente zunächst im Extrusionsverfahren hergestellt und anschließend abgelängt werden. Dadurch wird es auch möglich, geschlossene Hohlräume oder Schlitze 78 zu fertigen, wie in Fig. 5 dargestellt.

Fig. 8 schließlich zeigt das Friktionselement 7.1, an dessen Kopf 72 über eine Sollbruchstelle 9 ein Halter 8 angeformt ist. Dieser erleichtert dem Zahntechniker die Handhabung der in der Praxis sehr kleinen Friktionselemente. Der Halter 8 läßt sich fast beliebig an die jeweiligen Umstände anpassen. Er kann gegebenenfalls auch an dem Haltekopf 77 angeformt werden. Nach der Montage wird er an der Sollbruchstelle 9 abgetrennt.

## Patentansprüche

1. Aus Patrize (3), Matrize (4) und einem auswechselbaren Friktionselement (7) bestehendes frikatives Verbindungselement der Zahnprothetik mit einer Halteöffnung (6), in Patrize oder ellatrize, zum Einsetzen des Friktionselementes (7), welches einen Kopf (72) mit einer Friktionsfläche (73) sowie einen in die Halteöffnung (6) einsteckbaren Schaft (71) besitzt und aus einem elastischen, dauerhaften und hygienisch unbedenklichen Kunststoff besteht, dadurch gekennzeichnet, daß die Unterseite des Kopfes (72) ballig bzw. konisch geformt ist, und daß die Halteöffnung (6) in dem dem Kopf (72) benachbarten Bereich konisch angesenkt ist, wobei der Winkel dieses Konus (61) abgestimmt ist auf die Elastizität und den Reibkoeffizienten des Kunststoffs einerseits und die Form des Kopfes (72) andererseits.

2. Verbindungselement nach Anspruch 1, dadurch gekennzeichnet, daß die Friktionsfläche (73) des Kopfes (72) ballig ist.

3. Verbindungselement nach Anspruch 1 oder 2, dadurch gekennzeichnet, daß in das Friktionselement (7) eine Bohrung oder ein Schlitz (75) eingearbeitet ist.

4. Verbindungselement nach einem der Ansprüche 1 bis 3, dadurch gekennzeichnet, daß der Schaft (71) Friktionslamellen (74) besitzt, die sich elastisch gegen die Wand der Halteöffnung (6) abstützen, wobei der Querschnitt der Friktionslamellen (74) sägezahnförmig, wellenförmig, gewindeförmig oder dergleichen ist.

5. Verbindungselement nach Anspruch 4, dadurch gekennzeichnet, daß der Schaft (71) so lang ist, daß sich wenigstens eine der Friktionslamellen (74) hinter dem rückseitigen Ende der Halteöffnung (6.2, 6.3) aufspreizt.

6. Verbindungselement nach einem der Ansprüche 1 bis 5, dadurch gekennzeichnet, daß die Querschnitte von Friktionsselement (7) und Halteöffnung (6.1, 6.2, 6.3) rund, oval bzw. rechteckig sind.

7. Verbindungselement nach einem der Ansprüche 4 bis 6, dadurch gekennzeichnet, daß für das Friktionselement (7.3, 7.4) ein aus Kunststoff bestehender Haltekopf (77) vorgesehen ist, der auf den Schaft (71) aufsteckbar ist und dabei mit den Friktionslamellen (74) verrastet.

8. Verbindungselement nach einem der Ansprüche 1 bis 7, dadurch gekennzeichnet, daß das Friktionselement (7.4, 7.5) bzw. der Hattekopf (77) von Extrusionsteilen abgelängt ist.

9. Verbindungselement nach einem der Ansprüche 1 bis 7, dadurch gekennzeichnet, daß das Friktionselement (7.1, 7.2, 7.3) bzw. der Haltekopf (77) Spritzgußteile sind.

10. Verbindungselement nach einem der Ansprüche 1 bis 7, dadurch gekennzeichnet, daß das Friktionselement (7.1, 7.2, 7.3) bzw. der Haltekopf (77) Drehteile sind.

11. Verbindungselement nach einem der Ansprüche 1 bis 10, dadurch gekennzeichnet, daß an ihm, insbesondere an seinem Kopf (72), und gegebenenfalls auch am Haltekopf (77) ein Halter (8) angeformt ist, insbesondere über eine Sollbruchstelle (9).

## Claims

1. Fricative connection element consisting of a male piece (3), a female piece (4) and a replaceable friction element (7) for dental prosthetics, with a holding opening (6) in the male piece or the female piece for inserting the friction element (7), which has a head (72) with a friction face (73) as well as a shaft (71), which can be inserted in the holding opening (6), and consists of an elastic, durable and hygienically harmless plastic, characterised in that the underside of the head (72) is convex or conical, and that the holding opening (6) is conically countersunk in the region which is adjacent to the head (72), the angle of this cone (61) being adapted to the elasticity and the coefficient of friction of the plastic on the one hand and the shape of the head (72) on the other.

2. Connection element according to claim 1, characterised in that the friction face (73) of the head (72) is convex.

3. Connection element according to claim 1 or 2, characterised in that a hole or a slot (75) is worked into the friction element (7).

4. Connection element according to one of claims 1 to 3, characterised in that the shaft (71) has friction lamellae (74) which are supported elastically against the wall of the holding opening (6), the cross section of the friction lamellae (74) being saw-toothed, undulatory, thread-shaped or similar.

5. Connection element according to claim 4, characterised in that the shaft (71) is of a length which is such that at least one of the friction lamellae (74) expands after the rear end of the holding opening (6.2, 6.3).

6. Connection element according to one of claims 1 to 5, characterised in that the cross sections of the friction element (7) and the holding opening (6.1, 6.2, 6.3) are round, oval or rectangular.

7. Connection element according to one of claims 4 to 6, characterised in that a holding head (77), which consists of plastic, is provided for the friction element (7.3, 7.4), which head can be placed on the shaft (71) and in the process engaged with the friction lamellae (74).

8. Connection element according to one of claims 1 to 7, characterised in that the friction element (7.4, 7.5) and the holding head (77) are cut off extruded parts.

9. Connection element according to one of claims 1 to 7, characterised in that the friction element (7.1, 7.2, 7.3) and the holding head (77) are injection moulded parts.

10. Connection element according to one of claims 1 to 7, characterised in that the friction element (7.1, 7.2, 7.3) and the holding head (77) are turned parts.

11. Connection element according to one of claims 1 to 10, characterised in that a holder (8) is moulded onto it, in particular onto its head (72) and possibly also onto the holding head (77), in particular via a predetermined breaking point (9).

## Revendications

1. Élément de liaison à friction, constitué d'un élément mâle (3), d'une matrice (4) et d'un élément de friction (7) amovible, réalisé dans la technique des prothèses dentaires avec une ouverture de maintien (10) ménagée dans l'élément mâle ou dans la matrice, pour insérer l'élément de friction (7) qui est composé d'une tête (72) avec une surface de friction (73), ainsi que d'une tige (71) pouvant être enfichée dans l'ouverture de maintien (6) et est constitué d'une matière synthétique élastique, durable et hygiéniquement inoffensive, caractérisé en ce que la face inférieure de la tête (72) est de forme bombée respectivement conique et en ce que l'ouverture de maintien (6) est creusée de façon conique dans la zone voisine de la tête (72), l'angle de ce cône (61) dépendant de l'élasticité et du coefficient de friction de la matière synthétique, d'une part, et de la forme de la tête (72), d'autre part.

2. Élément de liaison selon la revendication 1 caractérisé en ce que la face de friction (73) de la tête (72) est bombée.

3. Élément de liaison selon la revendication 1 ou 2, caractérisé en ce qu' un perçage ou une fente (75) est usiné(e) dans l'élément de friction (7).

4. Élément de liaison selon l'une des revendications 1 à 3, caractérisé en ce que la tige (71) a des lamelles de friction (74) qui prennent appui élastiquement contre une paroi de l'ouverture de maintien (6), la section transversale des lamelles de friction (74) étant en forme de dents de scie, d'ondulations, de filetages ou analogues.

5. Élément de liaison selon la revendication 4, caractérisé en ce que la tige (91) est d'une longueur telle qu'au moins l'une des lamelles de friction (74) s'ouvre par écartement derrière l'extrémité arrière de l'ouverture de maintien (6.2, 6.3).

6. Élément de liaison selon l'une des revendications 1 à 5, caractérisé en ce que les sections transversales de l'élément de friction (7) et de l'ouverture de maintien (6.1, 6.2, 6.3) sont rondes, ovales, ou rectangulaires.

7. Élément de liaison selon l'une des revendications 4 à 6, caractérisé en ce que, pour l'élément de friction (7.3, 7.4) est prévue une tête de maintien (77), constituée de matière synthétique et pouvant être enfichée sur la tige (71) et s'encliquetant alors avec les lamelles de friction (74).

8. Élément de liaison selon l'une des revendications 1 à 7, caractérisé en ce que l'élément de friction (7.4, 7.5), respectivement la tête de maintien (44), est coupé à longueur, à partir de pièces d'extrusion.

9. Elément de liaison selon l'une des revendications 7 à 9, caractérisé en ce que l'élément de friction (7.1, 7.2, 7.3), respectivement la tête de maintien (77), sont des pièces moulées par injection.

10. Élément de liaison selon l'une des revendications 1 à 7, caractérisé en ce que l'élément de friction (7.1, 7.2, 7.3), respectivement la tête maintien (77) sont des pièces usinées par tournage.

11. Élément de liaison selon l'une des revendications 1 à 10, caractérisé en ce qu' un support (8) est formé d'un seul tenant, en particulier par l'intermédiaire d'une zone de rupture 9, sur ledit élément de liaison, respectivement sur sa tête (72) et, le cas échéant, également sur la tête de maintien (77.
